# EUROPEAN PATENT APPLICATION

(11) **EP 4 186 748 A1**
(43) Date of publication of application: **31.05.2023**
(21) Application number: 22189207.8
(22) Date of filing: 08.08.2022
(51) Int. Cl.: B60N 2/28

(54) **INTERNATIONAL STANDARDS ORGANIZATION FIX (ISOFIX) MECHANISM AND SAFETY SEAT COMPRISING SAME**

(30) Priority: 26.11.2021 CN 202111423489
(71) Applicant: Ningbo Baby First Baby Products Co., Ltd., Yuyao, Zhejiang 315412 (CN)
(72) Inventor: PAN, Xiaolu, Yuyao, Zhejiang, 315412 (CN); GUO, Yi, Yuyao, Zhejiang, 315412 (CN); WANG, Youping, Yuyao, Zhejiang, 315412 (CN)
(74) Representative: Kolster Oy Ab

(57) **Abstract**

The present invention provides an ISOFIX mechanism and a safety seat including the same, and relates to the technical field of safety seats. The ISOFIX mechanism provided by the present invention includes a sleeve, a shell, a fastening member, a connecting rod, and a locking member. The shell is slidably connected in the sleeve. The connecting rod includes a first pushing portion and a limiting portion. The fastening member, the connecting rod, and the locking member are each movably connected in the shell. In an unlocked state, the fastening member is in a non-engaging state, the locking member is locked on the sleeve, the first pushing portion abuts against the fastening member, and the limiting portion abuts against the locking member to prevent the locking member from detaching from the sleeve. In the ISOFIX mechanism and the safety seat provided by the present invention, the locking member can be completely locked in the unlocked state, which alleviates the technical problem that the length dimension of the ISOFIX mechanism cannot be locked when the ISOFIX mechanism is squeezed or collided.

## Description

### TECHNICAL FIELD

The present invention relates to the technical field of safety seats, and particularly to an International Standards Organization FIX (ISOFIX) mechanism and a safety seat including the same.

### BACKGROUND

ISOFIX refers to a connection structure between a child restraint system and a vehicle. The locking member in the ISOFIX mechanism is used to lock the shell relative to the sleeve. When a spring is adopted to act on the locking member to maintain the locking of the shell relative to the sleeve, the locking member will be unlocked when being squeezed or collided by an external force, and consequently the shell can slide relative to the sleeve, leading to a technical problem that the length dimension of the ISOFIX mechanism cannot be locked.

### SUMMARY

An objective of the present invention is to provide an ISOFIX mechanism and a safety seat including the same, to alleviate the technical problem in the prior art that the length dimension of the ISOFIX mechanism cannot be locked when the ISOFIX mechanism is squeezed or collided.

According to a first aspect, the present invention provides an ISOFIX mechanism, including a sleeve, a shell, a fastening member, a connecting rod, and a locking member.

The shell is slidably connected in the sleeve.

The connecting rod includes a first pushing portion and a limiting portion. The fastening member, the connecting rod, and the locking member are each movably connected in the shell.

In an unlocked state, the fastening member is in a non-engaging state, the locking member is locked on the sleeve, the first pushing portion abuts against the fastening member, and the limiting portion abuts against the locking member to prevent the locking member from detaching from the sleeve.

With reference to the first aspect, in a first possible implementation of the first aspect of the present invention, the connecting rod further includes a second abutting portion, and
when an external force acts on the connecting rod in a lock releasing direction, the ISOFIX mechanism switches from the unlocked state to a lock released state, the limiting portion gives a way to the locking member, and the second abutting portion abuts against the locking member and causes the locking member to be unlocked relative to the sleeve.

With reference to the first aspect, in a second possible implementation of the first aspect of the present invention, a release operating member is mounted on the connecting rod, and the release operating member passes through the shell and the sleeve to extend to an outside of the sleeve, the sleeve and/or the shell are/is provided with a sliding groove, and the release operating member is slidably engaged in the sliding groove.

With reference to the first aspect, in a third possible implementation of the first aspect of the present invention, a first elastic device is mounted on the shell, and the first elastic device is connected to the locking member, and
the first elastic device has a tendency to lock the locking member to the sleeve.

With reference to the first aspect, in a fourth possible implementation of the first aspect of the present invention, a second elastic device is mounted in the shell, the second elastic device is connected to the fastening member, and the second elastic device has a tendency of causing the fastening member to switch from an engaging state to the non-engaging state.

With reference to the fourth possible implementation of the first aspect, in a fifth possible implementation of the first aspect of the present invention, the second elastic device is connected between the fastening member and the connecting rod, and the second elastic device has a tendency to cause the connecting rod to move opposite to a lock releasing direction and causes the connecting rod to abut against the fastening member to abut or lock the fastening member.

With reference to the first aspect, in a sixth possible implementation of the first aspect of the present invention, the fastening member is rotatably connected in the shell, and the fastening member includes a first contact surface;
the first contact surface includes an arc surface;
the arc surface is coaxial with a rotating shaft of the fastening member;
alternatively, an axis of the arc surface is spaced from an axis of the rotating shaft of the fastening member, so that during the fastening member switching from the non-engaging state to an engaging state, the connecting rod has a headroom to move opposite to a lock releasing direction.

With reference to the sixth possible implementation of the first aspect, in a seventh possible implementation of the first aspect of the present invention, during the fastening member switching from the non-engaging state to the engaging state, the first pushing portion abuts against the arc surface.

With reference to the sixth possible implementation of the first aspect, in an eighth possible implementation of the first aspect of the present invention, in the lock releasing direction, an end surface of the limiting portion facing toward the locking member is inclined in a direction avoiding the locking member.

With reference to the first aspect, in a ninth possible implementation of the first aspect of the present invention, the sleeve is provided with a plurality of locking slots, and the plurality of locking slots are arranged at intervals, and
the locking member is provided with a locking protrusion matching with each of the locking slots.

With reference to the ninth possible implementation of the first aspect, in a tenth possible implementation of the first aspect of the present invention, the locking member further includes a first protruding portion; in the unlocked state, the limiting portion abuts against the first protruding portion; and in a lock released state or a locked state, the limiting portion is staggered from the first protruding portion.

With reference to the tenth possible implementation of the first aspect, in an eleventh possible implementation of the first aspect of the present invention, the locking member is provided with a clearance groove, and the clearance groove is located on a side of the first protruding portion away from the fastening member; from the unlocked state to the locked state, the limiting portion moves relative to the first protruding portion toward a direction away from the clearance groove; and from the unlocked state to the lock released state, the limiting portion moves relative to the first protruding portion toward an inside of the clearance groove.

With reference to the eleventh possible implementation of the first aspect, in a twelfth possible implementation of the first aspect of the present invention, the locking member further includes a second protruding portion; and from the unlocked state to the lock released state, the connecting rod abuts against the second protruding portion, and causes the locking protrusion to detach from each of the locking slots.

With reference to the twelfth possible implementation of the first aspect, in a thirteenth possible implementation of the first aspect of the present invention, a shaft rod is mounted on the shell, the locking member is rotatably connected to the shaft rod, the first protruding portion and the second protruding portion are arranged at intervals around the shaft rod, and the clearance groove is formed between the first protruding portion and the second protruding portion.

With reference to the twelfth possible implementation of the first aspect, in a fourteenth possible implementation of the first aspect of the present invention, a limiting member is mounted on the shell, the locking member is provided with a limiting groove, and the limiting member is located in the limiting groove.

With reference to the fourteenth possible implementation of the first aspect, in a fifteenth possible implementation of the first aspect of the present invention, the locking member further includes an eccentric protrusion, the second protruding portion is spaced apart from the eccentric protrusion, and the limiting groove is formed between the second protruding portion and the eccentric protrusion;
when the locking member is locked on the sleeve, the limiting member abuts against the eccentric protrusion; and
when the locking member is unlocked relative to the sleeve, the limiting member abuts against the second protruding portion.

According to a second aspect, the present invention provides a safety seat, including the ISOFIX mechanism according to the first aspect.

The embodiments of the present invention have the following beneficial effects. The shell is slidably connected in the sleeve. The connecting rod includes the first pushing portion and the limiting portion. The fastening member, the connecting rod, and the locking member are each movably connected in the shell. In the unlocked state, the fastening member is in the non-engaging state, the locking member is locked on the sleeve, the first pushing portion abuts against the fastening member, and the limiting portion abuts against the locking member to prevent the locking member from detaching from the sleeve. The limiting portion can prevent the locking member from getting loosened relative to the sleeve, so that the shell remains locked relative to the sleeve, thereby avoiding the technical problem that the length dimension of the ISOFIX mechanism cannot be locked when the locking member is squeezed or collided.

To make the objectives, features and advantages of the present invention clearer and more comprehensible, a detailed description is given below by way of preferred embodiments accompanied with figures.

### BRIEF DESCRIPTION OF THE DRAWINGS

In order to more clearly explain the technical solutions in the specific embodiments of the present invention or in the related art, the drawings used in the description of the specific embodiments or the related art will be briefly described below. Obviously, the drawings depicted below are merely some embodiments of the present invention, and those skilled in the art can obtain other drawings based on these drawings without any creative efforts.
FIG. 1 is a schematic diagram of an ISOFIX mechanism in an unlocked state according to an embodiment of the present invention.
FIG. 2 is a schematic diagram of an ISOFIX mechanism in a locked state according to an embodiment of the present invention.
FIG. 3 is a schematic diagram of an ISOFIX mechanism in a lock released state according to an embodiment of the present invention.
FIG. 4 is a schematic diagram of a fastening member of an ISOFIX mechanism according to an embodiment of the present invention.
FIG. 5 is a partially enlarged schematic view of an ISOFIX mechanism according to an embodiment of the present invention.
FIG. 6 is a schematic diagram of a locking member of an ISOFIX mechanism according to an embodiment of the present invention.

Reference numerals: 001 - sleeve; 101 - locking slot; 002 - shell; 003 - fastening member; 301 - first contact surface; 302 - second contact surface; 303 - hooking groove; 304 - mounting hole; 004 - connecting rod; 401 - first pushing portion; 402 - limiting portion; 403 - second abutting portion; 404 - release operating member; 005 - locking member; 501 - clearance groove; 502 - limiting groove; 510 - locking protrusion; 511 - first limiting end surface; 512 - second limiting end surface; 520 - first protruding portion; 530 - second protruding portion; 540 - shaft hole; 550 - eccentric protrusion; 551 - limiting hole; 006 - shaft rod; 007 - first elastic device; 008 - second elastic device; 009 - limiting member.

### DETAILED DESCRIPTION OF THE EMBODIMENTS

The technical solutions of the present invention will be described clearly and fully with reference to the accompanying drawings. Apparently, the embodiments described are some preferred embodiments, rather than all of the embodiments of the present invention. All other embodiments obtained by a person of ordinary skill in the art without creative efforts based on the embodiments of the present invention shall fall within the protection scope of the present invention.

In the description of the present invention, it should be noted that the orientation or positional relationships indicated by the terms "center", "upper", "lower", "left", "right", "vertical", "horizontal", "inner", "outer", etc. are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention. In addition, the terms "first" and "second" are used herein for purposes of description, and are not intended to indicate or imply relative importance. A physical quantity in a formula, if not marked separately, should be understood as a basic quantity of a basic unit of the International System of Units, or a derived quantity derived from the basic quantity through mathematical operations such as multiplication, division, differentiation, or integration.

In the description of the present invention, it should be noted that, unless otherwise clearly specified and defined, the terms "mount", "connect", "couple", and variants thereof should be interpreted in a broad sense, for example, may be a fixed connection, a detachable connection, or an integral connection; may be a mechanical connection or an electrical connection; or may be a direct connection, an indirectly connection via an intermediate medium, or communication between the interiors of two components. For those of ordinary skill in the art, the specific meanings of the above terms in the present invention can be understood according to specific circumstances.

### Embodiment 1

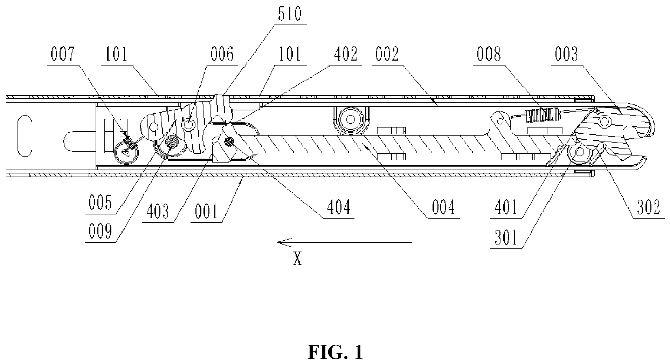

As shown in FIG. 1, this embodiment of the present invention provides an ISOFIX mechanism, including a sleeve 001, a shell 002, a fastening member 003, a connecting rod 004, and a locking member 005. The shell 002 is slidably connected in the sleeve 001. The connecting rod 004 includes a first pushing portion 401 and a limiting portion 402, and the fastening member 003, the connecting rod 004, and the locking member 005 are each movably connected in the shell 002.

In an unlocked state, the fastening member 003 are in a non-engaging state, the locking member 005 is locked on the sleeve 001, the first pushing portion 401 abuts against the fastening member 003, and the limiting portion 402 abuts against the locking member 005 to prevent the locking member 005 from detaching from the sleeve 001.

Specifically, under the condition that the first pushing portion 401 abuts against the fastening member 003, the position of the connecting rod 004 can be kept stable, that is, the connecting rod 004 cannot move toward the right side in FIG. 1, so as to prevent the limiting portion 402 from deviating relative to the locking member 005. Therefore, the limiting portion 402 remains in the state of abutting against the locking member 005. The pushing action of the limiting portion 402 prevents the locking member 005 from detaching from the sleeve 001, which can ensure that the locking member 005 is always locked on the sleeve 001 to limit the sliding of the shell 002 along the sleeve 001, providing a function of locking the length dimension of the ISOFIX mechanism.

It should be noted that, in the unlocked state, the locking member 005 is limited by the limiting portion 402, which can prevent the locking member 005 from detaching from the sleeve 001 due to squeezing or collision, thereby fixing the shell 002 relative to the sleeve 001. In this way, the length dimension of the ISOFIX mechanism is locked, and the ISOFIX mechanism can be connected to an anchor point on a vehicle by pushing and pressing. After the ISOFIX mechanism is connected to the anchor point on the vehicle, the fastening member 003 is switched to the engaging state.

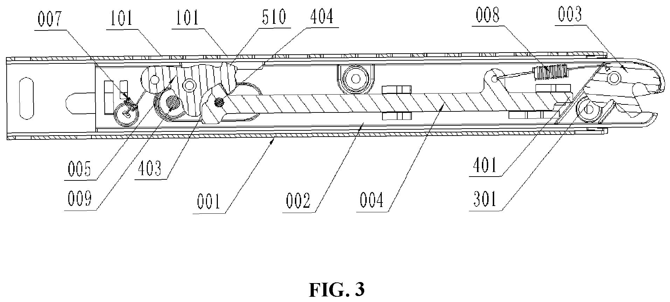

As shown in FIG. 1 and FIG. 3, the connecting rod 004 further includes a second abutting portion 403. When an external force acts on the connecting rod 004 in a lock releasing direction (x direction in FIG. 1), the ISOFIX mechanism switches from the unlocked state to a lock released state, the limiting portion 402 gives a way to the locking member 005, and the second abutting portion 403 abuts against the locking member 005 and causes the locking member 005 to be unlocked relative to the sleeve 001. In the unlocked state and the lock released state, the fastening member 003 is always kept in the non-engaging state.

It should be noted that a release operating member 404 is mounted on the connecting rod 004, and the release operating member 404 passes through the shell 002 and the sleeve 001 to extend to an outside of the sleeve 001, the sleeve 001 and/or the shell 002 are/is provided with a sliding groove, and the release operating member 404 is slidably engaged in the sliding groove.

In an implementation, one of the sleeve 001 and the shell 002 is provided with a sliding groove, and the other is provided with a groove opening, and the sliding groove is opposite to the groove opening. The release operating member 404 extends to the outside of the sleeve 001 through the sliding groove and the groove opening, and the release operating member 404 is slidable along the sliding groove. An operator may touch the release operating member 404 outside the sleeve 001, and operate the release operating member 404 to slide in the x-direction in FIG. 1.

In another implementation, the sleeve 001 and the shell 002 are respectively provided with two sliding grooves, the two sliding grooves are arranged opposite to each other, the release operating member 404 extends to the outside of the sleeve 001 through the two sliding grooves, and the release operating member 404 is slidable along the sliding grooves.

When the release operating member 404 is manually operated to slide toward the left side in FIG. 1, the second abutting portion 403 pushes against the locking member 005 and causes the locking member 005 to be unlocked relative to the sleeve 001, and the connecting rod 004 pulls the fastening member 003 through the second elastic device 008, so that the fastening member 003 can be switched to the non-engaging state.

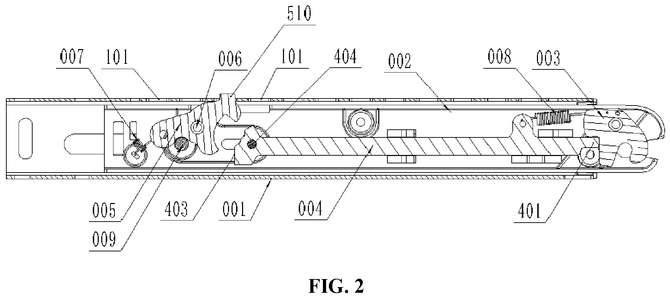

As shown in FIG. 2, the ISOFIX mechanism is switched to a locked state. In this case, although the locking member 005 is locked on the sleeve 001, the limiting portion 402 gives a way to the locking member 005, so that the locking member 005 is no longer locked. In addition, the fastening member 003 is switched to the engaging state, and the first pushing portion 401 is inserted into a locking portion of the fastening member 003, so that the fastening member 003 is locked in the engaging state.

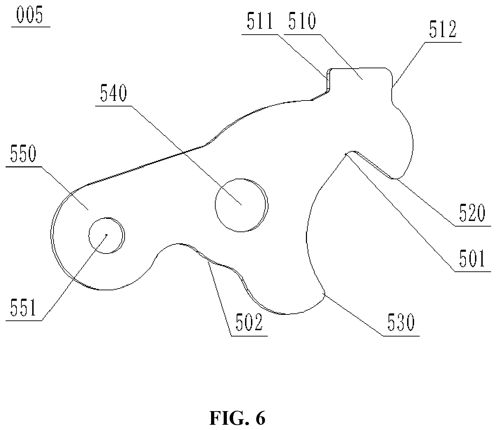

As shown in FIG. 1, FIG. 2, FIG. 3, and FIG. 6, a first elastic device 007 is mounted on the shell 002, and the first elastic device 007 is connected to the locking member 005. The first elastic device 007 has a tendency to lock the locking member 005 to the sleeve 001.

In an implementation, the locking member 005 is slidably connected to the shell 002, to achieve insertion/removal of the locking protrusion 510 into/from a locking slot 101.

In this implementation, a shaft rod 006 is mounted on the shell 002, and the locking member 005 is rotatably connected to the shaft rod 006. The locking member 005 is provided with a shaft hole 540, and the shaft rod 006 is inserted into the shaft hole 540, so that the locking member 005 can rotate about the shaft rod 006, to achieve insertion/removal of the locking protrusion 510 into/from the locking slot 101.

Specifically, the first elastic device 007 includes a tension spring or a torsion spring, the locking member 005 is provided with a limiting hole 551, an end of the first elastic device 007 is inserted into the limiting hole 551, and an elastic force of the first elastic device 007 acts on the locking member 005, so that the locking protrusion 510 of the locking member 005 remains in a state of being inserted in the locking slot 101. The second abutting portion 403 is arranged on an end of the connecting rod 004 away from the first pushing portion 401. When the second abutting portion 403 pushes the second protruding portion 530, the locking member 005 overcomes the elastic force of the first elastic device 007 and rotates about the shaft rod 006, so that the locking protrusion 510 can be pulled out from the locking slot 101.

As shown in FIG. 1, FIG. 2, and FIG. 3, a second elastic device 008 is mounted in the shell 002, the second elastic device 008 is connected to the fastening member 003, and the second elastic device 008 has a tendency of causing the fastening member 003 to switch from an engaging state to the non-engaging state.

Specifically, the second elastic device 008 includes a tension spring or a torsion spring, an end of the second elastic device 008 is connected to the fastening member 003, and an elastic force of the second elastic device 008 acts on the fastening member 003, so that the fastening member 003 can be kept in the non-engaging state.

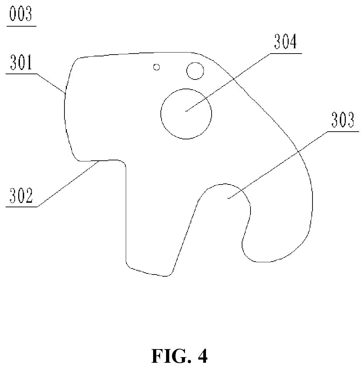

As shown in FIG. 1, FIG. 2, FIG. 3, and FIG. 4, the fastening member 003 is provided with a hooking groove 303. When the ISOFIX mechanism is connected to an anchor point on a vehicle, a locking pin is pushed against the fastening member 003 and is inserted into the hooking groove 303, to push the fastening member 003 to switch from the non-engaging state to the engaging state, so that the locking pin can be limited in the hooking groove 303.

The fastening member 003 is provided with a mounting hole 304, a pin shaft is mounted on the shell 002, and the mounting hole 304 is sleeved on the pin shaft, so that the fastening member 003 can rotate about the pin shaft. When the ISOFIX mechanism is connected to an anchor point on a vehicle, a locking pin of the anchor point on the vehicle is pushed against the fastening member 003, so that the fastening member 003 rotates around the pin shaft, to cause the locking pin to be limited in the hooking groove 303, thereby achieving the switching of the fastening member 003 from the non-engaging state to the engaging state.

As shown in FIG. 1, FIG. 2, FIG. 3, and FIG. 4, the second elastic device 008 is connected between the fastening member 003 and the connecting rod 004, and the second elastic device 008 has a tendency to cause the connecting rod 004 to move opposite to the lock releasing direction x and causes the connecting rod 004 to abut against the fastening member 003 to abut or lock the fastening member 003.

Specifically, the second elastic device 008 has an elastic force that pulls the fastening member 003 and the connecting rod 004 to move toward each other. Under the action of the elastic force of the second elastic device 008, the fastening member 003 not only tends to maintain the non-engaging state, but also can elastically pull the connecting rod 004 to move opposite to the lock releasing direction x. When the fastening member 003 is in the non-engaging state, the first pushing portion 401 abuts against the fastening member 003, and the fastening member 003 can prevent the connecting rod 004 from moving opposite to the lock releasing direction x, i.e., from moving toward the right side of FIG. 1. When the fastening member is in the engaging state, the first pushing portion 401 is inserted into the locking portion of the fastening member 003, to lock the fastening member 003 in the engaging state.

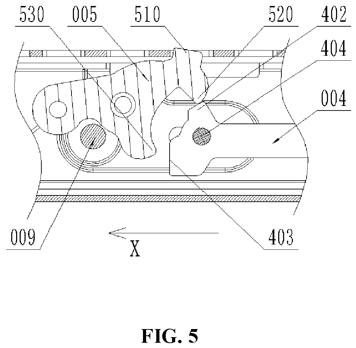

As shown in FIG. 1, FIG. 2, FIG. 3, FIG. 5, and FIG. 6, the sleeve 001 is provided with a plurality of locking slots 101, and the plurality of locking slots 101 are arranged at intervals along an extending direction of the sleeve 001. The locking member 005 is provided with a locking protrusion 510 matching with each of the locking slots 101. When the shell 002 slides along the sleeve 001, the length dimension of the ISOFIX mechanism increases or decreases. When the locking protrusion 510 is inserted in a locking slot 101 of the locking slots 101, the locking member 005 is locked on the sleeve 001, so that the shell 002 can be fixed relative to the sleeve 001, thereby locking the length dimension of the ISOFIX mechanism. When the locking protrusion 510 is detached from the locking slot 101, the shell 002 can slide relative to the sleeve 001, and the shell 002 can be extended or retracted relative to the sleeve 001, so that the length dimension of the ISOFIX mechanism can be adjusted.

As shown in FIG. 1, FIG. 2, FIG. 3, FIG. 5, and FIG. 6, the locking member 005 further includes a first protruding portion 520. In the unlocked state, the limiting portion 402 abuts against the first protruding portion 520, thereby completely locking the locking member 005. In a lock released state or a locked state, the limiting portion 402 is staggered from the first protruding portion 520. In the locked state, the locking protrusion 510 is inserted in the locking slot 101, but the limiting portion 402 is staggered from the first protruding portion 520, and the locking member 005 is not locked by the limiting portion 402, so that the locking member 005 is semi-locked. In the lock released state, the second abutting portion 403 pushes against the locking member 005 and causes the locking protrusion 510 to be pulled out from the locking slot 101. During this process, the limiting portion 402 is staggered from the first protruding portion 520, so that the locking member 005 can be unlocked relative to the sleeve 001.

Further, the locking member 005 is provided with a clearance groove 501, and the clearance groove 501 is located on a side of the first protruding portion 520 away from the fastening member 003. From the unlocked state to the locked state, the limiting portion 402 moves relative to the first protruding portion 520 toward a direction away from the clearance groove 501. From the unlocked state to the lock released state, the limiting portion 402 moves relative to the first protruding portion 520 toward an inside of the clearance groove 501.

Further, the locking member 005 further includes a second protruding portion 530. From the unlocked state to the lock released state, the connecting rod 004 abuts against the second protruding portion 530, and causes the locking protrusion 510 to detach from each of the locking slots 101.

In this implementation, a shaft rod 006 is mounted on the shell 002, the locking member 005 is rotatably connected to the shaft rod 006, the first protruding portion 520 and the second protruding portion 530 are arranged at intervals around the shaft rod 006, and the clearance groove 501 is formed between the first protruding portion 520 and the second protruding portion 530. The locking member 005 is provided with a shaft hole 540, and the shaft rod 006 is inserted into the shaft hole 540, so that the locking member 005 can rotate about the shaft rod 006, to achieve insertion/removal of the locking protrusion 510 into/from the locking slot 101. The locking protrusion 510, the second protruding portion 530, and the eccentric protrusion 550 are each arranged on the locking member 005, and the locking protrusion 510, the second protruding portion 530, and the eccentric protrusion 550 are arranged at intervals around the shaft hole 540. The first protruding portion 520 faces away from the locking protrusion 510, and the clearance groove 501 is located between the first protruding portion 520 and the second protruding portion 530. With the arrangement of the clearance groove 501 between the first protruding portion 520 and the second protruding portion 530, in the lock released state, an external force is applied to drive the connecting rod 004 to move along the lock releasing direction x, and the limiting portion 402 is staggered from the first protruding portion 520. When the second abutting portion 403 pushes against the second protruding portion 530 and causes the locking member 005 to rotate about the shaft rod 006, the locking protrusion 510 can be detached from the locking slot 101 and the limiting portion 402 can enter into the clearance groove 501.

As shown in FIG. 1, FIG. 2, FIG. 3, and FIG. 4, the fastening member 003 is rotatably connected in the shell 002, and the fastening member 003 includes a first contact surface 301. The first contact surface 301 includes an arc surface.

In an implementation, the arc surface is coaxial with a rotating shaft of the fastening member 003, and the connecting rod 004 keeps its position unchanged during the fastening member 003 switching from the engaging state to the non-engaging state. During the process of the fastening member 003 being gradually connected to the anchor point on the vehicle, the locking pin at the anchor point on the vehicle is pushed against the fastening member 003 to cause the fastening member 003 to swing. During this process, the elastic force of the second elastic device 008 causes the first pushing portion 401 to abut against the arc surface, so that the connecting rod 004 does not move along the lock releasing direction x, and the limiting portion 402 can keep abutting against the first protruding portion 520 of the locking member 005.

In another implementation, an axis of the arc surface is spaced from an axis of the rotating shaft of the fastening member 003, so that during the fastening member 003 switching from the non-engaging state to the engaging state, the connecting rod 004 has a headroom to move opposite to the lock releasing direction.

During the fastening member 003 switching from the non-engaging state to the engaging state, the first pushing portion 401 abuts against the arc surface. During the fastening member 003 switching from the non-engaging state to the engaging state, the second elastic device 008 pulls the connecting rod 004 to move opposite to the lock releasing direction x (toward the right side in FIG. 1), so that the first pushing portion 401 always abuts against the arc surface. During this process, the first elastic device 007 causes the locking member 005 to keep being locked to the sleeve 001, i.e., the locking member 005 is kept in the locked state by the elastic force of the first elastic device 007, thereby maintaining the state in which the locking protrusion 510 is inserted in the locking slot 101.

As shown in FIG. 1, FIG. 4, and FIG. 5, in the lock releasing direction x, an end surface of the limiting portion 402 facing toward the locking member 005 is inclined in a direction avoiding the locking member 005.

Specifically, along the lock releasing direction x, an end surface of the limiting portion 402 facing toward the first protruding portion 520 is inclined in a direction away from the first protruding portion 520. Under the pulling action of the second elastic device 008, the connecting rod 004 always abuts against the first contact surface 301. During the process of the fastening member 003 being gradually connected to the anchor point on the vehicle, the locking pin at the anchor point on the vehicle is pushed against the fastening member 003 to cause the fastening member 003 to swing. During this process, the connecting rod 004 moves opposite to the lock releasing direction x, i.e., toward the right side in FIG. 1, and the inclined surface of the limiting portion 402 gives a way to the first protruding portion 520, thereby preventing the movements of the locking member 005, the connecting rod 004, and the fastening member 003 from interfering with each other.

It should be explained that during the switching from the unlocked state to the locked state, the limiting portion 402 abuts against the first protruding portion 520, and the first protruding portion 520 can prevent the connecting rod 004 from moving along the lock releasing direction x. During the fastening member 003 switching from the non-engaging state to the engaging state, the fastening member 003 does not push the connecting rod 004 to move along the lock releasing direction x, thereby ensuring the smooth rotation of the fastening member 003.

As shown in FIG. 1, FIG. 2, FIG. 3, FIG. 5, and FIG. 6, a limiting member 009 is mounted on the shell 002, the locking member 005 is provided with a limiting groove 502, and the limiting member 009 is located in the limiting groove 502. The limiting member 009 is limited in the limiting groove 502, so that the locking member 005 is limited during switching between working positions.

Further, the locking member 005 further includes an eccentric protrusion 550, the second protruding portion 530 is spaced apart from the eccentric protrusion 550, and the limiting groove 502 is formed between the second protruding portion 530 and the eccentric protrusion 550. When the locking member 005 is locked on the sleeve 001, the limiting member 009 abuts against the eccentric protrusion 550. When the locking member 005 is unlocked relative to the sleeve 001, the limiting member 009 abuts against the second protruding portion 530.

In an implementation, a gap is provided between the limiting member 009 and the end surface of the limiting groove 502 facing toward the limiting member 009, so that during rotation of the locking member 005 about the shaft rod 006, no friction occurs between the locking member 005 and the limiting member 009.

In another implementation, the end surface of the limiting groove 502 facing toward the limiting member 009 is configured as an arc-shaped surface, and the arc-shaped surface is coaxial with the shaft rod 006. The limiting member 009 is rotatably connected to a limiting shaft rod on the shell 002. During the rotation of the locking member 005 about the shaft rod 006, the arc-shaped surface rubs the limiting shaft rod and causes the limiting shaft rod to rotate about its own axis, thereby reducing the frictional resistance received by the locking member 005.

Further, the eccentric protrusion 550 is provided with a limiting hole 551, the first elastic device 007 is a tension spring, one end of the tension spring is connected to the shell 002, and the other end of the tension spring is connected into the limiting hole 551. The first elastic device 007 drives the locking member 005 to rotate about the shaft rod 006 and causes the locking protrusion 510 to tend to be inserted into the locking slot 101.

Further, the locking protrusion 510 has a first limiting end surface 511 and a second limiting end surface 512, and the first limiting end surface 511 is opposite to the second limiting end surface 512. When the locking protrusion 510 is inserted in the locking slot 101, the first limiting end surface 511 and the second limiting end surface 512 are both limited in the locking slot 101, so that the shell 002 cannot slide relative to the sleeve 001, thereby fixing the length dimension of the ISOFIX mechanism. The first limiting end surface 511 abuts against an inner wall surface of the locking slot 101, which can prevent the shell 002 from retracting toward inside of the sleeve 001, thereby preventing the length dimension of the ISOFIX mechanism from being shortened. In addition, the second limiting end surface 512 abuts against the inner wall surface of the locking slot 101, which can prevent the shell 002 from being stretched toward the outside of the sleeve 001, thereby fixing the length dimension of the ISOFIX mechanism.

As shown in FIG. 1, FIG. 2, FIG. 3, and FIG. 4, the fastening member 003 has a second contact surface 302, and the first contact surface 301 and the second contact surface 302 are arranged at intervals around a circumferential direction of the mounting hole 304.

In the unlocked state, the first pushing portion 401 abuts against the first contact surface 301, to prevent the connecting rod 004 from moving toward the right side in FIG. 1.

In the locked state, the fastening member 003 rotates about an axis of the mounting hole 304 and causes the first pushing portion 401 to detach from the first contact surface 301, and then under a pulling force of the second elastic device 008, the connecting rod 004 slides toward the fastening member 003 and causes the first pushing portion 401 to abut against the second contact surface 302. The second contact surface 302 extends along a radial direction of the first contact surface 301. When the first pushing portion 401 abuts against the second contact surface 302, the fastening member 003 can be prevented from rotating about the axis of the mounting hole 304, thereby locking the fastening member 003 in the engaging state.

### Embodiment 2

This embodiment of the present invention provides a safety seat, including the ISOFIX mechanism provided in the above implementations.

Before use, first, the ISOFIX mechanism is placed in a lock released position shown in FIG. 1, and the limiting portion 402 abuts against the locking member 005, so that the locking member 005 is in a fully locked state, i.e., the locking member 005 is locked in the locking slot 101, and the locking member 005 can be prevented from detaching from the locking slot 101, thereby fixing the length dimension of the ISOFIX mechanism. At the same time, the elastic force of the second elastic device acts on the fastening member 003, so that the fastening member 003 is kept in the non-engaging state. When the safety seat is mounted on a vehicle, the ISOFIX mechanism is operated to connect to an anchor point on the vehicle, and the locking pin at the anchor point on the vehicle abuts against the fastening member 003, so as to push the fastening member 003 to switch from the non-engaging state to the engaging state. Referring to FIG. 1, FIG. 2, FIG. 4, and FIG. 6, when the fastening member 003 is in the engaging state, the second elastic device 008 pulls the connecting rod 004, to cause the first pushing portion 401 to abut against the second contact surface 302, so that the fastening member 003 can be limited in the engaging state. In this case, the locking member 005 is in a semi-locked state, and the elastic force of the first elastic device 007 acts on the locking member 005, so as to cause the locking protrusion 510 to be inserted into the locking slot 101. The connecting rod 004 is deviated in a direction away from the locking member 005, so that the limiting portion 402 is staggered from the first protruding portion 520. At this time, the connecting rod 004 no longer has the function of locking the locking member 005. Referring to FIG. 3, FIG. 5, and FIG. 6, when the release operating member 404 is pulled to move along the lock releasing direction x, the second abutting portion 403 pushes against the second protruding portion 530 to cause the locking member 005 to rotate about the shaft rod 006, until the locking protrusion 510 is pulled out from the locking slot 101. In this case, the shell 002 slides and contracts relative to the sleeve 001, and the first pushing portion 401 detaches from the second contact surface 302. Under the pulling action of the second elastic device 008, the fastening member 003 swings to the non-engaging state to release the locking pin of the anchor point on the vehicle, so that the ISOFIX mechanism can be removed from the anchor point on the vehicle. After the release operating member 404 is released, the fastening member 003 is kept in the non-engaging state under the elastic force of the second elastic device 008. The second elastic device 008 pulls the connecting rod 004 and causes the first pushing portion 401 to abut against the first contact surface 301. At the same time, the elastic force of the first elastic device 007 acts on the locking member 005 and causes the locking protrusion 510 to be inserted into the locking slot 101, and the limiting portion 402 abuts against the first protruding portion 520, thereby automatically returning to the locked state shown in FIG. 1.

Finally, it should be noted that the above embodiments are intended to illustrate, instead of limiting the technical solution of the present invention. Although the present invention is described in detail by way of examples, it should be understood by those of ordinary skill in the art that modifications may be made to the technical solutions described in the embodiments, and equivalents may be substituted for some or all the technical features, without essentially departing from the scope of the technical solution described in the embodiments of the present invention.

## Claims

1. An ISOFIX mechanism, comprising: a sleeve (001), a shell (002), a fastening member (003), a connecting rod (004), and a locking member (005), wherein
the shell (002) is slidably connected in the sleeve (001);
the connecting rod (004) comprises a first pushing portion (401) and a limiting portion (402), and the fastening member (003), the connecting rod (004), and the locking member (005) are each movably connected in the shell (002);
in an unlocked state, the fastening member (003) is in a non-engaging state, the locking member (005) is locked on the sleeve (001), the first pushing portion (401) abuts against the fastening member (003), and the limiting portion (402) abuts against the locking member (005) to prevent the locking member (005) from detaching from the sleeve (001).

2. The ISOFIX mechanism according to claim 1, wherein the connecting rod (004) further comprises a second abutting portion (403);
when an external force acts on the connecting rod (004) in a lock releasing direction, the ISOFIX mechanism switches from the unlocked state to a lock released state, the limiting portion (402) gives a way to the locking member (005), and the second abutting portion (403) abuts against the locking member (005) and causes the locking member (005) to be unlocked relative to the sleeve (001).

3. The ISOFIX mechanism according to claim 1, wherein a release operating member (404) is mounted on the connecting rod (004), and the release operating member (404) passes through the shell (002) and the sleeve (001) to extend to an outside of the sleeve (001);
the sleeve (001) and/or the shell (002) are/is provided with a sliding groove, and the release operating member (404) is slidably engaged in the sliding groove.

4. The ISOFIX mechanism according to claim 1, wherein a first elastic device (007) is mounted on the shell (002), and the first elastic device (007) is connected to the locking member (005); and
the first elastic device (007) has a tendency to lock the locking member (005) to the sleeve (001).

5. The ISOFIX mechanism according to claim 1, wherein a second elastic device (008) is mounted in the shell (002), the second elastic device (008) is connected to the fastening member (003), and the second elastic device (008) has a tendency of causing the fastening member (003) to switch from an engaging state to the non-engaging state.

6. The ISOFIX mechanism according to claim 5, wherein the second elastic device (008) is connected between the fastening member (003) and the connecting rod (004), and the second elastic device (008) has a tendency to cause the connecting rod (004) to move opposite to a lock releasing direction and causes the connecting rod (004) to abut against the fastening member (003) to abut or lock the fastening member (003).

7. The ISOFIX mechanism according to claim 1 or 5, wherein the fastening member (003) is rotatably connected in the shell (002), and the fastening member (003) comprises a first contact surface (301);
the first contact surface (301) comprises an arc surface;
the arc surface is coaxial with a rotating shaft of the fastening member (003);
alternatively, an axis of the arc surface is spaced from an axis of the rotating shaft of the fastening member (003), so that during the fastening member (003) switching from the non-engaging state to an engaging state, the connecting rod (004) has a headroom to move opposite to a lock releasing direction.

8. The ISOFIX mechanism according to claim 7, wherein during the fastening member (003) switching from the non-engaging state to the engaging state, the first pushing portion (401) abuts against the arc surface.

9. The ISOFIX mechanism according to claim 7, wherein in the lock releasing direction, an end surface of the limiting portion (402) facing toward the locking member (005) is inclined in a direction avoiding the locking member (005).

10. The ISOFIX mechanism according to claim 1, wherein the sleeve (001) is provided with a plurality of locking slots (101), and the plurality of locking slots (101) are arranged at intervals; and
the locking member (005) is provided with a locking protrusion (510) matching with each of the locking slots (101).

11. The ISOFIX mechanism according to claim 10, wherein the locking member (005) further comprises a first protruding portion (520);
in the unlocked state, the limiting portion (402) abuts against the first protruding portion (520);
in a lock released state or a locked state, the limiting portion (402) is staggered from the first protruding portion (520).

12. The ISOFIX mechanism according to claim 11, wherein the locking member (005) is provided with a clearance groove (501), and the clearance groove (501) is located on a side of the first protruding portion (520) away from the fastening member (003);
from the unlocked state to the locked state, the limiting portion (402) moves relative to the first protruding portion (520) toward a direction away from the clearance groove (501); and
from the unlocked state to the lock released state, the limiting portion (402) moves relative to the first protruding portion (520) toward an inside of the clearance groove (501).

13. The ISOFIX mechanism according to claim 12, wherein the locking member (005) further comprises a second protruding portion (530); and
from the unlocked state to the lock released state, the connecting rod (004) abuts against the second protruding portion (530), and causes the locking protrusion (510) to detach from each of the locking slots (101).

14. The ISOFIX mechanism according to claim 13, wherein a shaft rod (006) is mounted on the shell (002), the locking member (005) is rotatably connected to the shaft rod (006), the first protruding portion (520) and the second protruding portion (530) are arranged at intervals around the shaft rod (006), and the clearance groove (501) is formed between the first protruding portion (520) and the second protruding portion (530).

15. The ISOFIX mechanism according to claim 13, wherein a limiting member (009) is mounted on the shell (002), the locking member (005) is provided with a limiting groove (502), and the limiting member (009) is located in the limiting groove (502).

16. The ISOFIX mechanism according to claim 15, wherein the locking member (005) further comprises an eccentric protrusion (550), the second protruding portion (530) is spaced apart from the eccentric protrusion (550), and the limiting groove (502) is formed between the second protruding portion (530) and the eccentric protrusion (550);
when the locking member (005) is locked on the sleeve (001), the limiting member (009) abuts against the eccentric protrusion (550); and
when the locking member (005) is unlocked relative to the sleeve (001), the limiting member (009) abuts against the second protruding portion (530).

17. A safety seat, comprising the ISOFIX mechanism according to any one of claims 1-16.
